# EUROPEAN PATENT APPLICATION

(11) **EP 3 771 700 A1**
(43) Date of publication of application: **03.02.2021**
(21) Application number: 20187482.3
(22) Date of filing: 23.07.2020
(51) Int. Cl.: C03C 27/10, B32B 7/12, B32B 17/06, C03B 23/023

(54) **COLD-FORMED GLASS ASSEMBLIES AND METHODS OF MAKING**

(30) Priority: 02.08.2019 US 201962882166 P
(71) Applicant: Corning Incorporated, Corning, New York 14831 (US)
(72) Inventor: Benjamin, Jeffrey M., Horseheads, NY 14845 (US); Knickerbocker, Ward Tyson, Nelson, PA 16940 (US); Mou, Jinfa, Painted Post, NY 14870 (US); Vasilakos, Kevin Andrew, Painted Post, NY 14870 (US); Yuen, Po Ki, Painted Post, NY 14870-9388 (US)
(74) Representative: Epping - Hermann - Fischer

(57) **Abstract**

Various examples of the present disclosure provide a cold-formed glass assembly. The assembly includes a curved glass substrate and a curved structural frame. A coefficient of thermal expansion between the curved glass substrate and the curved structural frame are different. An adhesive can be disposed between the curved glass substrate and the curved structural frame. The assembly can further include an elastomeric layer, a matrix material or both in contact with the adhesive and disposed between the curved glass substrate and the curved structural frame.

## Description

### CROSS-REFERENCE TO RELATED APPLICATIONS

This application claims the benefit of priority under 35 U.S.C. § 119 of U.S. Provisional Application Serial No. 62/882,166 filed on August 2, 2019 the content of which is relied upon and incorporated herein by reference in its entirety.

### BACKGROUND

Glass assemblies can be used in a variety of different assemblies. For example, glass assemblies can be included in an automobile. When glass assemblies are formed, defects can be imparted into the assemblies that can drastically reduce the performance of the assemblies. It may therefore be desirable to improve method of manufacturing the glass assemblies or incorporate additional features into the glass assembly to mitigate the risk of the assemblies having defects imparted during formation.

### SUMMARY OF THE DISCLOSURE

Various examples of the present disclosure provide a cold-formed glass assembly. The assembly includes a curved glass substrate and a curved structural frame. A coefficient of thermal expansion between the curved glass substrate and the curved structural frame are different. An adhesive can be disposed between the curved glass substrate and the curved structural frame. The assembly can further include an elastomeric layer in contact with the adhesive and disposed between the curved glass substrate and the curved structural frame.

Various examples of the present disclosure further include a method of making a cold-formed glass assembly. The assembly includes a curved glass substrate and a curved structural frame. A coefficient of thermal expansion between the curved glass substrate and the curved structural frame are different. An adhesive can be disposed between the curved glass substrate and the curved structural frame. The assembly can further include an elastomeric layer in contact with the adhesive and disposed between the curved glass substrate and the curved structural frame. The method includes applying the adhesive to a surface of the elastomeric layer. The method further includes applying the elastomeric layer to the curved structural frame. The method further includes applying the curved glass substrate to the adhesive.

Various examples of the present disclosure further include a cold-formed glass assembly. The assembly includes a curved glass substrate and a curved structural frame. An adhesive is disposed between the curved glass substrate and the curved structural frame. The assembly further includes a matrix material at least partially disposed in the adhesive and including a gridded network comprising a series of intersecting lines of the matrix material.

Various examples of the present disclosure provide a method of forming a cold-formed glass assembly. The assembly includes a curved glass substrate and a curved structural frame. An adhesive is disposed between the curved glass substrate and the curved structural frame. The assembly further includes a matrix material at least partially disposed in the adhesive and further includes a gridded network comprising a series of intersecting lines of the matrix material. The method includes at least partially embedding the matrix material in the adhesive. The method further includes contacting at least one of the curved glass substrate and the curved structural frame with the adhesive.

Various examples of the present disclosure provide a cold-formed glass assembly. The assembly includes a curved glass substrate. The assembly further includes a curved structural frame. A coefficient of thermal expansion between the curved glass substrate and the curved structural frame are different. The assembly further includes an adhesive disposed between the curved glass substrate and the curved structural frame. The assembly further includes an elastomeric layer in contact with the adhesive and disposed between the curved glass substrate and the curved structural frame. The assembly further includes a matrix material at least partially disposed in the adhesive, the elastomeric layer, or both. The matrix material includes a gridded network comprising a series of intersecting lines of the matrix material.

Various examples of the present disclosure provide a method of forming a cold-formed glass assembly. The assembly includes a curved glass substrate. The assembly further includes a curved structural frame. A coefficient of thermal expansion between the curved glass substrate and the curved structural frame are different. The assembly further includes an adhesive disposed between the curved glass substrate and the curved structural frame. The assembly further includes an elastomeric layer in contact with the adhesive and disposed between the curved glass substrate and the curved structural frame. The assembly further includes a matrix material at least partially disposed in the adhesive, the elastomeric layer, or both. The matrix material includes a gridded network comprising a series of intersecting lines of the matrix material. The method includes applying the adhesive to a surface of the elastomeric layer. The method further includes applying the elastomeric layer to the curved structural frame. The method further includes at least partially embedding the matrix material in the adhesive, the elastomeric layer or both. The method further includes contacting at least one of the curved glass substrate and the curved structural frame with the adhesive.

### BRIEF DESCRIPTION OF THE FIGURES

The drawings illustrate generally, by way of example, but not by way of limitation, various examples discussed in the present document.
FIG. 1 is a sectional view of cold-formed glass assembly, in accordance with various examples.
FIG. 2 is a sectional view of another cold-formed glass assembly, in accordance with various examples.
FIG. 3 is a sectional top view of the cold-formed glass assembly of FIG. 2, in accordance with various examples.
FIG. 4 is a sectional view of another cold-formed glass assembly, in accordance with various examples.

### DETAILED DESCRIPTION

Reference will now be made in detail to certain examples of the disclosed subject matter, examples of which are illustrated in part in the accompanying drawings. While the disclosed subject matter will be described in conjunction with the enumerated claims, it will be understood that the exemplified subject matter is not intended to limit the claims to the disclosed subject matter.

Various methods and assemblies described herein relate to cold-formed glass assemblies and method of making the same. The cold-formed glass assemblies described herein can impart many beneficial properties to the assemblies. For example, various examples of the cold-formed glass assemblies can be designed be better mitigate potential damage caused by a mismatch in the coefficient of thermal expansion between components such as between a curved glass substrate and a curved structural frame to which the curved glass substrate is adhered. According to various further examples of the present disclosure, the assemblies described can be helpful to create a substantially uniform adhesive layer (e.g., an adhesive layer having a substantially consistent thickness). According to various examples this can help to reduce any deformations in the assemblies, improve adhesion between components, or reduce the amount of visual distortion in the assemblies. Although the glass substrates and structural frames described herein are described as "curved" it is within the scope of this disclosure for the glass substrates or structural frame to also be free of a curve, according to various examples.

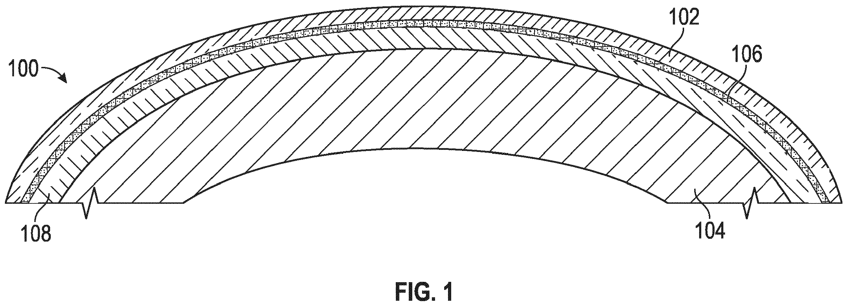

FIG. 1 is a sectional view of cold-formed glass assembly 100. Cold-formed glass assembly 100 includes a cold-formed, curved glass substrate 102, curved structural frame 104, adhesive 106, and elastomeric layer 108. A coefficient of thermal expansion between curved glass substrate 102 and curved structural frame 104 can be different. For example, a coefficient of thermal expansion of curved glass substrate 102 can be less than the coefficient of thermal expansion of curved structural frame 104. According to various examples, the coefficient of thermal expansion of curved glass substrate 102 can be in a range of from about 2 times less to about 100 times less than the coefficient of thermal expansion of curved structural frame 104, about 5 times less to about 50 times less, about 10 times less to about 30 times less, less than, equal to, or greater than about 2 times less, 5, 10, 15, 20, 25, 30, 35, 40, 45, 50, 55, 60, 65, 70, 75, 80, 85, 90, 95, or about 100 times less.

Curved glass substrate 102 can include many suitable materials of mixtures of materials. Examples of suitable materials include soda lime silicate glass, alkali aluminosilicate glass, alkali containing borosilicate glass, alkali aluminophosphosilicate glass, alkali aluminoborosilicate glass, or a mixture thereof. In some examples, the soda lime silicate glass is substantially free of iron, iron oxide, or mixtures thereof. According to various examples of the present disclosure, curved glass substrate 102 can be unstrengthened, annealed, or strengthened. Where curved glass substrate 102 is a strengthened glass substrate, the strengthened glass substrate may be strengthened to include a compressive stress that extends from a surface to a depth of compression or depth of compressive stress layer (DOL). The compressive stress at the surface is referred to as the surface CS. The CS regions are balanced by a central portion exhibiting a tensile stress. At the DOL, the stress crosses from a compressive stress to a tensile stress. The compressive stress and the tensile stress are provided herein as absolute values.

In one or more examples, the strengthened glass substrate may be strengthened in two or more steps to achieve a first partial strength level (e.g., strengthened to a degree that is a portion of the final strength level in terms of surface CS and DOL) and a final strength level. In one or more examples, the strengthening process used to strengthen the strengthened glass substrate may include any one or combinations of a thermal strengthening process, a chemical strengthening process and a mechanical strengthening process.

In one or more examples, the strengthened glass substrate may be mechanically strengthened by utilizing a mismatch of the coefficient of thermal expansion between portions of the article to create a compressive stress region and a central region exhibiting a tensile stress. In some examples, the strengthened glass substrate may be thermally strengthened by heating the glass to a temperature above the glass transition point and then rapidly quenching. In various examples of the present disclosure, the strengthened glass substrate may be chemically strengthened by ion exchange. In the ion exchange process, ions at or near the surface of the glass substrate are replaced by - or exchanged with - larger ions having the same valence or oxidation state. In examples in which the strengthened glass substrate comprises an alkali aluminosilicate glass, ions in the surface layer of the article and the larger ions are monovalent alkali metal cations, such as Li⁺, Na⁺, K⁺, Rb⁺, and Cs⁺. Alternatively, monovalent cations in the surface layer may be replaced with monovalent cations other than alkali metal cations, such as Ag⁺ or the like. In such examples, the monovalent ions (or cations) exchanged into the glass substrate generate a stress. It should be understood that any alkali metal oxide containing inner glass ply can be chemically strengthened by an ion exchange process.

Curved glass substrate 102 can have any suitable thickness. For example, a thickness of curved glass substrate 102 can be in a range of from about 0.3 mm to about 5 mm, about 1 mm to about 2 mm, less than, equal to, or greater than about 0.3 mm, 0.5, 1, 1.5, 2, 2.5, 3, 3.5, 4, 4.5, or about 5 mm.

Curved glass substrate 102 can be a single-ply glass substrate or a multi-ply glass laminate. Where curved glass substrate 102 is a multi-ply laminate, it can include a first glass ply, a second glass ply, and an interlayer disposed between the plies. First glass ply includes a first major surface and a second major surface, which opposes the first major surface. The second glass substrate includes a third major surface and a fourth major surface, which opposes the third major surface. The interlayer can include materials chosen from polyvinyl butyral, acoustic polyvinyl butyral, an ionomer, ethylene-vinyl acetate, a thermoplastic polyurethane, a polyester, polyethylene terephthalate, or a mixture thereof.

In one or more embodiments, the curved cover glass substrate is curved by cold-forming and is referred to as a cold-formed, curved glass substrate. As used herein, the terms "cold-forming" and cold-formed" means a curvature that is imparted to the glass substrate 102 at a cold-forming temperature which is less than the softening point of the glass. Often, the cold-forming temperature is room temperature. The term "cold-formable" refers to the capability of a glass substrate to be cold-formed. In one or more embodiments the cold-formed glass substrate may comprise a glass substrate (or glass ceramic article), which may optionally be strengthened. In more embodiments, a feature of a cold-formed glass substrate is asymmetric surface compressive stress between the first major surface and the second (opposing) major surface. In one or more embodiments, prior to the cold-forming process or being cold-formed, the respective compressive stresses in the first major surface and the second major surface of the glass substrate are substantially equal. In one or more embodiments in which the glass substrate is unstrengthened, the first major surface and the second major surface exhibit no appreciable CS, prior to cold-forming. In one or more embodiments in which the glass substrate is strengthened (as described herein), the first major surface and the second major surface exhibit substantially equal compressive stress with respect to one another, prior to cold-forming. In one or more embodiments, after cold-forming, the CS on the surface having a concave shape after cold-forming increases, while the CS on the surface having a convex shape after cold-forming decreases. In other words, the CS on the concave surface is greater after cold-forming than before cold-forming. Without being bound by theory, the cold-forming process increases the CS of the glass substrate being shaped to compensate for tensile stresses imparted during cold-forming. In one or more embodiments, the cold-forming process causes the concave surface to experience compressive stresses, while the surface forming a convex shape after cold-forming experiences tensile stresses. The tensile stress experienced by the convex surface following cold-forming results in a net decrease in surface compressive stress, such that the compressive stress in convex surface of a strengthened glass substrate following cold-forming is less than the compressive stress on the same surface when the glass substrate is flat. Cold-formed glass substrates differ from hot formed glass substrates which are permanently curved and the first major surface and the second major surface have the same CS as one another.

The curved glass substrate may have a single curvature in with one of the first major surface and second major surface comprises a concave shape and the other of the first and the second major surface comprises a corresponding convex shape. In one or more embodiments, the first major surface may have a portion comprising a concave shape and a second portion comprising a convex shape. The concave and convex shape of the first major surface may be adjacent one another or may include a flat portion therebetween. The second major surface would form a corresponding shape.

In one or more embodiments, the first or second major surface comprises a first radius of curvature in a range from about 20 mm to about 20,000 mm. In one or more embodiments, first radius of curvature is from about 20 mm to about 20,000 mm, from about 20 mm to about 18,000 mm, from about 20 mm to about 16,000 mm, from about 20 mm to about 15,000 mm, from about 20 mm to about 14,000 mm, from about 20 mm to about 12,000 mm, from about 20 mm to about 10,000 mm, from about 20 mm to about 9,000 mm, from about 20 mm to about 8,000 mm, from about 20 mm to about 7,000 mm, from about 20 mm to about 6,000 mm, from about 20 mm to about 5,000 mm, from about 20 mm to about 4,000 mm, from about 20 mm to about 3,000 mm, from about 20 mm to about 2,000 mm, from about 20 mm to about 1,000 mm, from about 20 mm to about 750 mm, from about 20 mm to about 500 mm from about 20 mm to about 250 mm, from about 50 mm to about 20,000 mm, from about 75 mm to about 20,000 mm, from about 100 mm to about 20,000 mm, from about 200 mm to about 20,000 mm, from about 300 mm to about 20,000 mm, from about 400 mm to about 20,000 mm, from about 500 mm to about 20,000 mm, from about 600 mm to about 20,000 mm, from about 700 mm to about 20,000 mm, from about 800 mm to about 20,000 mm, from about 900 mm to about 20,000 mm, from about 1,000 mm to about 20,000 mm, from about 1,100 mm to about 20,000 mm, from about 1,200 mm to about 20,000 mm, from about 1,300 mm to about 20,000 mm, from about 1,400 mm to about 20,000 mm, from about 1,500 mm to about 20,000 mm, from about 1,600 mm to about 20,000 mm, from about 1,700 mm to about 20,000 mm, from about 1,800 mm to about 20,000 mm, from about 1,900 mm to about 20,000 mm, from about 2,000 mm to about 20,000 mm, from about 2,100 mm to about 20,000 mm, from about 2,200 mm to about 20,000 mm, from about 2,300 mm to about 20,000 mm, from about 2,400 mm to about 20,000 mm, from about 2,500 mm to about 20,000 mm, from about 3,000 mm to about 20,000 mm, from about 3,500 mm to about 20,000 mm, from about 4,000 mm to about 20,000 mm, from about 5,000 mm to about 20,000 mm, from about 7,500 mm to about 20,000 mm, from about 20 mm to about 1,000 mm, from about 200 mm to about 1,000 mm, or from about 400 mm to about 1,000 mm. Additional curved portions of the glass substrate may comprise a radius of curvature in the ranges described with respect to the first radius of curvature.

In some examples, interlayer can include a plasticizer. Where present the plasticizer can help to enhance the damping effect of the interlayer by making the interlayer less rigid and softer than a corresponding interlayer that is free of the plasticizer or includes comparatively less plasticizer. Plasticizer content can be characterized by parts per hundred resin (phr) e.g., parts plasticizer per 100 grams resin (e.g., PVB) of the interlayer. For example, the interlayer can include 0 to 100 parts per hundred resin (phr), about 10 to 80 phr, about 20 to 70, phr, about 30 to 60 phr, or greater than 5 phr, greater than 10 phr, or greater than 15 phr, or greater than 20 phr or greater than 25 phr, or greater than 30 phr or greater than 35 phr or greater than 40 phr or less than 100 phr or less than 90 phr, or less than 80 phr or less than 70 phr or less than 60 phr.

Examples of suitable plasticizers can include capric acid, lauric acid, a fatty acid, oleic acid, citric acid, tartaric acid, malic acid, lactic acid, 2-ethyl hexanoic acid, myristic acid, phthalic acid, adipic acid, trimellitic acid, glutaric acid, hydrocholroic acid, hypochlorous acid, chloric acid, sulfonic acid, benzenesulfonic acid, sulphonic acid, sulfuric acid, polysulfuric acid, peroxymonosulfuric acid, peroxydisulfuric acid, dithionic acid, thiosulfuric acid, disulfurous acid, sulfurous acid, dithionous acid, polythionic acid, thiosulfurous acid, acidic acid, phosphoric acids, phosphorous acids, phosphonic acids, and sebacic acid. Other examples of suitable plasticizers include esters, ethers, hydrocarbons, paraffins, sulphonamides, sulfonates, terephthalates, terpenes, and trimellitates. Common among ester-based plasticizers are esters of mono- or di-basic acids such as myristate esters, phthalate esters, adipate esters, phosphate esters, citrates, trimellitates, glutarates, and sebacate esters (e.g., dialkyl phthalates, such as dibutyl phthalate, diisoctyl phthalate, dibutyl adipate, dioctyl adipate; 2-ethylhexyl diphenyl diphosphate; t-butylphenyl diphenyl phosphate; butyl benzylphthalates; dibutoxyethoxyethyl adipate; dibutoxypropoxypropyl adipate; acetyltri-n-butyl citrate; dibutylsebacate; etc.). Phosphate ester plasticizers are commercially sold under the trade designation SANTICIZER from Monsanto; St. Louis, MO. Glutarate plasticizers are commercially sold under the trade designation PLASTHALL 7050 from CP. Hall Co.; Chicago, IL. Additional examples of ester-based plasticizers include aliphatic monoalkyl esters, aromatic monoalkyl esters, aliphatic polyalkyl esters, aromatic polyalkyl esters, polyalkyl esters of aliphatic alcohols, phosphonic polyalkyl esters, aliphatic poly(alkoxylated) esters, aromatic poly(alkoxylated) esters, poly(alkoxylated) ethers of aliphatic alcohols, and poly(alkoxylated) ethers of phenols. In some examples the esters are derived from an alcohol or from a renewable source, such as 2-octanol, citronellol, dihydrocitronellol or from 2-alkyl alkanols. Other examples of suitable plasticizers include triethylene glycol di-(2-ethyl hexanoate), triethylene glycol di-(2- ethyl butyrate), triethylene glycol diheptanoate, dihexyl adipate, dibutyl sebacate, dioctyl sebacate, di-(butoxy ethyl)adipate, bis (2-(2-butoxyethoxy)ethyl adipate.

Curved glass substrate 102 is ultimately attached to curved structural frame through adhesive 106 and elastomeric layer 108. Curved structural frame 104 can include any suitable material such as a metal, a ceramic, a plastic, a fiber glass, a carbon fiber or a mixture thereof. Examples of suitable metals include aluminum, steel, titanium, magnesium, alloys thereof, or mixtures thereof. The steel, for example, can be a stainless steel, carbon steel, or a galvanized steel. Where curved structural frame 104 includes a ceramic, the ceramic can include alumina, silica, ceria, a silicon nitride, a glass, an alumina-phosphorous pentoxide, an alumina-boria-silica, a zirconia, a zirconia-alumina, a zirconia-silica, an aluminum oxide, a heat-treated aluminum oxide, a sintered aluminum oxide, a silicon carbide material, titanium diboride, boron carbide, tungsten carbide, titanium carbide, diamond, cubic boron nitride, garnet, fused alumina-zirconia, cerium oxide, zirconium oxide, titanium oxide, or a mixture thereof. In examples where curved structural frame 104 includes plastic, the plastic can include a polyolefin, a polycarbonate, a polyurethane, a polyester, a polystyrene, a polyketone, copolymers thereof, glass filled equivalents thereof, or mixtures thereof. The polyolefin can include a polypropylene, a polyethylene, copolymers thereof, or mixtures thereof.

Curved structural frame 104 can be a component of an interior of a vehicle. For example, curved structural frame 104 can be a component of a vehicle dashboard encasing a gauge or electronic device. As such, curved structural frame 104 can include an opening that is bounded by curved structural frame 104. The gauge or electronic component can be positioned substantially in line with the opening. Curved glass substrate 102 can then be contacted with curved structural frame 104 in such a manner that the opening is substantially or fully covered by curved glass substrate 102.

Elastomeric layer 108 is disposed between curved glass substrate 102 and curved structural frame 104. Elastomeric layer 108 can have a Young's Modulus in a range of from about 0.1 MPa to about 20 MPa, about 0.5 MPa to about 10 MPa, less than, equal to, or greater than about 0.1 MPa, 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, or about 20 MPa. Elastomeric layer 108 can include a polymer or combination of polymers. For example, elastomeric layer 108 can include a styrenic block copolymer, a thermoplastic polyolefin elastomer, a thermoplastic vulcanizate, a thermoplastic polyurethane, a thermoplastic copolyester, a thermoplastic polyamide, a silicone rubber, an ethylene propylene diene monomer rubber, copolymers thereof, or mixtures thereof. A thickness of elastomeric layer 108 can be in a range of from about 0.1 mm to about 5 mm, about 0.5 mm to about 2 mm, less than, equal to, or greater than about 0.1 mm, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, or about 5 mm.

Cold-formed glass assembly 100 can be held together through adhesives. As shown in FIG. 1, adhesive 106 is disposed between curved glass substrate 102 and elastomeric layer 108. In further examples, a second adhesive can be positioned between curved structural frame 104 and elastomeric layer 108. Adhesive 106 can include any suitable adhesive or combination of adhesives. For example, adhesive 106 can include an acrylic adhesive, an epoxy adhesive, a urethane adhesive, a polyurethane adhesive, or a mixture thereof. A thickness of adhesive 106 can be in a range of from about 0.1 mm to about 5 mm, about 0.5 mm to about 2 mm, less than, equal to, or greater than about 0.1 mm, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, or about 5 mm.

Any of the components mentioned herein can be formed from a substantially transparent material. In some examples, the components can be formed from a fully transparent material. This can help to prevent distortion in an image that is transmitted through cold-formed glass assembly 100.

As mentioned herein, elastomeric layer 108 can be helpful in decreasing the degree of structural deformation such that it is less in cold-formed glass assembly 100 as compared to a degree of structural deformation in a corresponding cold-formed glass assembly that is free of the elastomeric layer. As an example, of the structural deformation that is reduced, the amount of the maximum structural adhesive shear stress in cold-formed glass assembly 100 can be substantially reduced. These stresses can be reduced in part by the ability of elastomeric layer 108 being able to absorb stresses caused by the non-uniform expansion or contraction of curved glass substrate 102 and curved structural frame 104 to which elastomeric layer 108 is exposed during manufacturing and during normal use.

Cold-formed glass assembly 100 can be formed according to any suitable method. As an example of a suitable method, cold-formed glass assembly 100 can be formed by applying adhesive 106 to a surface of elastomeric layer 108. Adhesive 106 can be applied to multiple sides of elastomeric layer 108. Following application of adhesive 106 to elastomeric layer 108, elastomeric layer 108 can be applied to curved structural frame. A glass substrate can then be brought into contact with elastomeric layer 108 adhesive 106 and curved thereon through a cold-forming process. Cold forming involves bending a flat piece of the glass. Cold forming (e.g., bending) is an energy efficient method of creating curved glass substrates based on the elastic deformation of glass at room temperature (e.g., about 25 °C) or another relatively low temperature (e.g., < 140 °C) with the application of out of plane loads to create the desired shape. During the cold forming process, a flat high-strength glass is three-dimensionally (3D) deformed and mechanically fixed to a target pre-formed 3D frame to which, e.g., display functional modules are mounted. This cold forming process results in stresses in the resulting curved glass. A cold-formed glass method can be used to make the glass to a 3D shape without a heat associated forming; this avoids heating the glass and pressing or sagging the glass to the shape at a viscous state. In some examples, cold forming can be less expensive than hot (thermal) forming. According to various examples, elastomeric layer 108 can be over-injection molded or cast onto curved glass substrate 102, curved structural frame 104, adhesive 106, or a combination thereof.

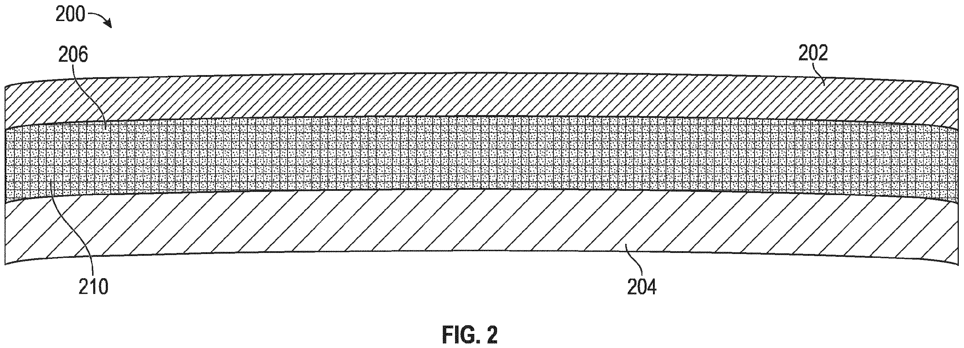

FIG. 2 is a sectional view of cold-formed glass assembly 200. Cold-formed glass assembly 200 is formed to include curved glass substrate 202, curved structural frame 204, adhesive 206, and matrix material 210.

Curved glass substrate 202 can include many suitable materials of mixtures of materials. Examples of suitable materials include soda lime silicate glass, alkali aluminosilicate glass, alkali containing borosilicate glass, alkali aluminophosphosilicate glass, alkali aluminoborosilicate glass, or a mixture thereof. In some examples, the soda lime silicate glass is substantially free of iron, iron oxide, or mixtures thereof. According to various examples of the present disclosure, curved glass substrate 202 can be unstrengthened, annealed, or strengthened. Where curved glass substrate 202 is a strengthened glass substrate, the strengthened glass substrate may be strengthened to include a compressive stress that extends from a surface to a depth of compression or depth of compressive stress layer (DOL). The compressive stress at the surface is referred to as the surface CS. The CS regions are balanced by a central portion exhibiting a tensile stress. At the DOL, the stress crosses from a compressive stress to a tensile stress. The compressive stress and the tensile stress are provided herein as absolute values.

In one or more examples, the strengthened glass substrate may be strengthened in two or more steps to achieve a first partially strength level (e.g., strengthened to a degree that is a portion of the final strength level in terms of surface CS and DOL) and a final strength level. In one or more examples, the strengthening process used to strengthen the strengthened glass substrate may include any one or combinations of a thermal strengthening process, a chemical strengthening process and a mechanical strengthening process.

In one or more examples, the strengthened glass substrate may be mechanically strengthened by utilizing a mismatch of the coefficient of thermal expansion between portions of the article to create a compressive stress region and a central region exhibiting a tensile stress. In some examples, the strengthened glass substrate may be thermally strengthened by heating the glass to a temperature above the glass transition point and then rapidly quenching. In various examples of the present disclosure, the strengthened glass substrate may be chemically strengthened by ion exchange. In the ion exchange process, ions at or near the surface of the glass substrate are replaced by - or exchanged with - larger ions having the same valence or oxidation state. In examples in which the strengthened glass substrate comprises an alkali aluminosilicate glass, ions in the surface layer of the article and the larger ions are monovalent alkali metal cations, such as Li⁺, Na⁺, K⁺, Rb⁺, and Cs⁺. Alternatively, monovalent cations in the surface layer may be replaced with monovalent cations other than alkali metal cations, such as Ag⁺ or the like. In such examples, the monovalent ions (or cations) exchanged into the glass substrate generate a stress. It should be understood that any alkali metal oxide containing inner glass ply can be chemically strengthened by an ion exchange process.

Curved glass substrate 202 can have any suitable thickness. For example, a thickness of curved glass substrate 202 can be in a range of from about 0.3 mm to about 5 mm, about 1 mm to about 2 mm, less than, equal to, or greater than about 0.3 mm, 0.5, 1, 1.5, 2, 2.5, 3, 3.5, 4, 4.5, or about 5 mm.

Curved glass substrate 202 can be a single-ply glass substrate or a multi-ply glass laminate. Where curved glass substrate 202 is a multi-ply laminate, it can include a first glass ply, a second glass ply, and an interlayer disposed between the plies. First glass ply includes a first major surface and a second major surface, which opposes the first major surface. The second glass substrate includes a third major surface and a fourth major surface, which opposes the third major surface.

In one or more embodiments, the curved cover glass substrate 202 is curved by cold-forming and is referred to as a cold-formed, curved glass substrate. As used herein, the terms "cold-forming" and cold-formed" means a curvature that is imparted to the glass substrate 102 at a cold-forming temperature which is less than the softening point of the glass. Often, the cold-forming temperature is room temperature. The term "cold-formable" refers to the capability of a glass substrate to be cold-formed. In one or more embodiments the cold-formed glass substrate may comprise a glass substrate (or glass ceramic article), which may optionally be strengthened. In more embodiments, a feature of a cold-formed glass substrate is asymmetric surface compressive stress between the first major surface and the second (opposing) major surface. In one or more embodiments, prior to the cold-forming process or being cold-formed, the respective compressive stresses in the first major surface and the second major surface of the glass substrate are substantially equal. In one or more embodiments in which the glass substrate is unstrengthened, the first major surface and the second major surface exhibit no appreciable CS, prior to cold-forming. In one or more embodiments in which the glass substrate is strengthened (as described herein), the first major surface and the second major surface exhibit substantially equal compressive stress with respect to one another, prior to cold-forming. In one or more embodiments, after cold-forming, the CS on the surface having a concave shape after cold-forming increases, while the CS on the surface having a convex shape after cold-forming decreases. In other words, the CS on the concave surface is greater after cold-forming than before cold-forming. Without being bound by theory, the cold-forming process increases the CS of the glass substrate being shaped to compensate for tensile stresses imparted during cold-forming. In one or more embodiments, the cold-forming process causes the concave surface to experience compressive stresses, while the surface forming a convex shape after cold-forming experiences tensile stresses. The tensile stress experienced by the convex surface following cold-forming results in a net decrease in surface compressive stress, such that the compressive stress in convex surface of a strengthened glass substrate following cold-forming is less than the compressive stress on the same surface when the glass substrate is flat. Cold-formed glass substrates differ from hot formed glass substrates which are permanently curved and the first major surface and the second major surface have the same CS as one another.

The curved glass substrate 202 may have a single curvature in with one of the first major surface and second major surface comprises a concave shape and the other of the first and the second major surface comprises a corresponding convex shape. In one or more embodiments, the first major surface may have a portion comprising a concave shape and a second portion comprising a convex shape. The concave and convex shape of the first major surface may be adjacent one another or may include a flat portion therebetween. The second major surface would form a corresponding shape.

In one or more embodiments, the first or second major surface of the curved glass substrate 202 comprises a first radius of curvature in a range from about 20 mm to about 20,000 mm. In one or more embodiments, first radius of curvature is from about 20 mm to about 20,000 mm, from about 20 mm to about 18,000 mm, from about 20 mm to about 16,000 mm, from about 20 mm to about 15,000 mm, from about 20 mm to about 14,000 mm, from about 20 mm to about 12,000 mm, from about 20 mm to about 10,000 mm, from about 20 mm to about 9,000 mm, from about 20 mm to about 8,000 mm, from about 20 mm to about 7,000 mm, from about 20 mm to about 6,000 mm, from about 20 mm to about 5,000 mm, from about 20 mm to about 4,000 mm, from about 20 mm to about 3,000 mm, from about 20 mm to about 2,000 mm, from about 20 mm to about 1,000 mm, from about 20 mm to about 750 mm, from about 20 mm to about 500 mm from about 20 mm to about 250 mm, from about 50 mm to about 20,000 mm, from about 75 mm to about 20,000 mm, from about 100 mm to about 20,000 mm, from about 200 mm to about 20,000 mm, from about 300 mm to about 20,000 mm, from about 400 mm to about 20,000 mm, from about 500 mm to about 20,000 mm, from about 600 mm to about 20,000 mm, from about 700 mm to about 20,000 mm, from about 800 mm to about 20,000 mm, from about 900 mm to about 20,000 mm, from about 1,000 mm to about 20,000 mm, from about 1,100 mm to about 20,000 mm, from about 1,200 mm to about 20,000 mm, from about 1,300 mm to about 20,000 mm, from about 1,400 mm to about 20,000 mm, from about 1,500 mm to about 20,000 mm, from about 1,600 mm to about 20,000 mm, from about 1,700 mm to about 20,000 mm, from about 1,800 mm to about 20,000 mm, from about 1,900 mm to about 20,000 mm, from about 2,000 mm to about 20,000 mm, from about 2,100 mm to about 20,000 mm, from about 2,200 mm to about 20,000 mm, from about 2,300 mm to about 20,000 mm, from about 2,400 mm to about 20,000 mm, from about 2,500 mm to about 20,000 mm, from about 3,000 mm to about 20,000 mm, from about 3,500 mm to about 20,000 mm, from about 4,000 mm to about 20,000 mm, from about 5,000 mm to about 20,000 mm, from about 7,500 mm to about 20,000 mm, from about 20 mm to about 1,000 mm, from about 200 mm to about 1,000 mm, or from about 400 mm to about 1,000 mm.

Additional curved portions of the glass substrate 202 may comprise a radius of curvature in the ranges described with respect to the first radius of curvature.

The interlayer can include materials chosen from polyvinyl butyral, acoustic polyvinyl butyral, an ionomer, ethylene-vinyl acetate, a thermoplastic polyurethane, a polyester, polyethylene terephthalate, or a mixture thereof.

In some examples, interlayer can include a plasticizer. Where present, the plasticizer can help to enhance the damping effect of the interlayer by making the interlayer less rigid and softer than a corresponding interlayer that is free of the plasticizer or includes comparatively less plasticizer. Plasticizer content can be characterized by parts per hundred resin (phr) e.g., parts plasticizer per 100 grams resin (e.g., PVB) of the interlayer. For example, the interlayer can include 0 to 100 parts per hundred resin (phr), about 10 to 80 phr, about 20 to 70, phr, about 30 to 60 phr, or greater than 5 phr, greater than 10 phr, or greater than 15 phr, or greater than 20 phr or greater than 25 phr, or greater than 30 phr or greater than 35 phr or greater than 40 phr or less than 100 phr or less than 90 phr, or less than 80 phr or less than 70 phr or less than 60 phr.

Examples of suitable plasticizers can include capric acid, lauric acid, a fatty acid, oleic acid, citric acid, tartaric acid, malic acid, lactic acid, 2-ethyl hexanoic acid, myristic acid, phthalic acid, adipic acid, trimellitic acid, glutaric acid, hydrocholroic acid, hypochlorous acid, chloric acid, sulfonic acid, benzenesulfonic acid, sulphonic acid, sulfuric acid, polysulfuric acid, peroxymonosulfuric acid, peroxydisulfuric acid, dithionic acid, thiosulfuric acid, disulfurous acid, sulfurous acid, dithionous acid, polythionic acid, thiosulfurous acid, acidic acid, phosphoric acids, phosphorous acids, phosphonic acids, and sebacic acid. Other examples of suitable plasticizers include esters, ethers, hydrocarbons, paraffins, sulphonamides, sulfonates, terephthalates, terpenes, and trimellitates. Common among ester-based plasticizers are esters of mono- or di-basic acids such as myristate esters, phthalate esters, adipate esters, phosphate esters, citrates, trimellitates, glutarates, and sebacate esters (e.g., dialkyl phthalates, such as dibutyl phthalate, diisoctyl phthalate, dibutyl adipate, dioctyl adipate; 2-ethylhexyl diphenyl diphosphate; t-butylphenyl diphenyl phosphate; butyl benzylphthalates; dibutoxyethoxyethyl adipate; dibutoxypropoxypropyl adipate; acetyltri-n-butyl citrate; dibutylsebacate; etc.). Phosphate ester plasticizers are commercially sold under the trade designation SANTICIZER from Monsanto; St. Louis, MO. Glutarate plasticizers are commercially sold under the trade designation PLASTHALL 7050 from CP. Hall Co.; Chicago, IL. Additional examples of ester-based plasticizers include aliphatic monoalkyl esters, aromatic monoalkyl esters, aliphatic polyalkyl esters, aromatic polyalkyl esters, polyalkyl esters of aliphatic alcohols, phosphonic polyalkyl esters, aliphatic poly(alkoxylated) esters, aromatic poly(alkoxylated) esters, poly(alkoxylated) ethers of aliphatic alcohols, and poly(alkoxylated) ethers of phenols. In some examples the esters are derived from an alcohol or from a renewable source, such as 2-octanol, citronellol, dihydrocitronellol or from 2-alkyl alkanols. Other examples of suitable plasticizers include triethylene glycol di-(2-ethyl hexanoate), triethylene glycol di-(2- ethyl butyrate), triethylene glycol diheptanoate, dihexyl adipate, dibutyl sebacate, dioctyl sebacate, di-(butoxy ethyl)adipate, bis (2-(2-butoxyethoxy)ethyl adipate.

Curved glass substrate 202 is ultimately attached to curved structural frame through adhesive 206. Curved structural frame 204 can include any suitable material such as a metal, a ceramic, a plastic, a fiber glass, a carbon fiber or a mixture thereof. Examples of suitable metals include aluminum, steel, titanium, magnesium, alloys thereof, or mixtures thereof. The steel, for example, can be a stainless steel, carbon steel, or a galvanized steel. Where curved structural frame 204 includes a ceramic, the ceramic can include alumina, silica, ceria, a silicon nitride, a glass, an alumina-phosphorous pentoxide, an alumina-boria-silica, a zirconia, a zirconia-alumina, a zirconia-silica, an aluminum oxide, a heat-treated aluminum oxide, a sintered aluminum oxide, a silicon carbide material, titanium diboride, boron carbide, tungsten carbide, titanium carbide, diamond, cubic boron nitride, garnet, fused alumina-zirconia, cerium oxide, zirconium oxide, titanium oxide, or a mixture thereof. In examples where curved structural frame 204 comprises plastic, the plastic can include a polyolefin, a polycarbonate, a polyurethane, a polyester, a polystyrene, a polyketone, copolymers thereof, glass filled equivalents thereof, or mixtures thereof. The polyolefin can include a polypropylene, a polyethylene, copolymers thereof, or mixtures thereof.

Curved structural frame 204 can be a component of an interior of a vehicle. For example, curved structural frame 204 can be a component of a vehicle dashboard encasing a gauge or electronic device. As such curved structural frame 204 can include an opening that is bounded by curved structural frame 204. The gauge or electronic component can be positioned substantially in line with the opening. Curved glass substrate 202 can then be contacted with curved structural frame 204 in such a manner that the opening is substantially or fully covered by curved glass substrate 202.

Cold-formed glass assembly 200 can be held together through adhesives. As shown in FIG. 2 adhesive 206 is disposed between curved glass substrate 202 and curved structural frame 204 in such a manner to at least partially immerse matrix material 210. In further examples, a second adhesive can be positioned between curved structural frame 204 and elastomeric layer 208. Adhesive 206 can include any suitable adhesive or combination of adhesives. For example, adhesive 206 can include an acrylic adhesive, an epoxy adhesive, a urethane adhesive, a polyurethane adhesive, or a mixture thereof. A thickness of adhesive 206 can be in a range of from about 0.1 mm to about 5 mm, about 0.5 mm to about 2 mm, less than, equal to, or greater than about 0.1 mm, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, or about 5 mm.

Any of the components mentioned herein can be formed from a substantially transparent material. In some examples, the components can be formed from a fully transparent material. This can help to prevent distortion in an image that is transmitted through cold-formed glass assembly 200.

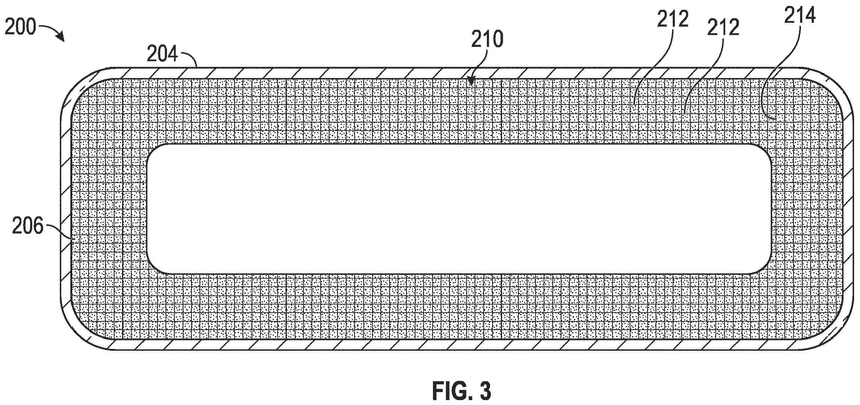

As shown in FIG. 2, cold-formed glass assembly 200 further includes matrix material 210. Matrix material 210 is shown at least partially disposed in adhesive 206. FIG. 3 is a sectional top view of glass assembly 200 showing matrix material 210 at least partially embedded in adhesive 206 and attached to curved structural frame 204. Matrix material 210 is formed of a gridded network comprising a series of intersecting lines 212 of the matrix material. Opening 214 is formed between each of intersecting lines 212. Openings 214 allow adhesive 206 to flow at least partially through matrix material and thereby immerse matrix material 210 in adhesive 206.

As shown in FIGs. 2 and 3, each of openings 214 has a quadrilateral square shape. However, in further examples any of openings 214 can have any desired shape such as a substantially circular shape or a polygonal shape. Examples of suitable circular shapes can include a perfect symmetric circle or an elongated asymmetric circle. Examples of suitable polygonal shapes can include a triangular shape (e.g., isosceles triangle, right triangle, equilateral triangle, acute triangle, or an obtuse triangle). Further examples of suitable polygonal shapes can include a quadrilateral (e.g., a square or rectangle), a pentagon, a hexagon, or any higher order polygonal shape. A major dimension (e.g., a width or diameter) of any one of openings 214 measured between two lines 212 can be in a range of from about 0.1 mm to about 5 mm, about 0.3 mm to about 4 mm, about 0.5 mm to about 3 mm, less than, equal to, or greater than about 0.1 mm, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, or about 5 mm. According to various examples, each of openings 214 can have substantially the same major dimension, however in further examples at least a portion of openings 214 can have different major dimensions. Similarly, a major dimension (e.g., a width or diameter) of any one of intersecting lines 212 can be in a range of from about 0.1 mm to about 5 mm, about 0.3 mm to about 4 mm, about 0.5 mm to about 3 mm, less than, equal to, or greater than about 0.1 mm, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, or about 5 mm. According to various examples, each of intersecting lines 212 can have substantially the same major dimension, however in further examples at least a portion of the total number of intersecting lines 212 can have different major dimensions.

Matrix material 210 can include any suitable material or mixture of materials. For example, matrix material 210 can include a metal, a ceramic, a plastic, a fiber glass, a carbon fiber or a mixture thereof. Examples of suitable metals include aluminum, steel, titanium, magnesium, alloys thereof, or mixtures thereof. The steel, for example, can be a stainless steel, carbon steel, or a galvanized steel. Where matrix material 210 includes a ceramic, the ceramic can include alumina, silica, ceria, a silicon nitride, a glass, an alumina-phosphorous pentoxide, an alumina-boria-silica, a zirconia, a zirconia-alumina, a zirconia-silica, an aluminum oxide, a heat-treated aluminum oxide, a sintered aluminum oxide, a silicon carbide material, titanium diboride, boron carbide, tungsten carbide, titanium carbide, diamond, cubic boron nitride, garnet, fused alumina-zirconia, cerium oxide, zirconium oxide, titanium oxide, or a mixture thereof. In examples where matrix material 210 comprises plastic, the plastic can include a polyolefin, a polycarbonate, a polyurethane, a polyester, a polystyrene, a polyketone, copolymers thereof, glass filled equivalents thereof, or mixtures thereof. The polyolefin can include a polypropylene, a polyethylene, copolymers thereof, or mixtures thereof. According to various examples, matrix material 210 and curved structural frame 204 can include the same material or mixture of materials.

Matrix material 210 can take the form of an independent mesh network that is disposed in adhesive 206. Alternatively, matrix material 210 can be formed from a material that is integral to curved structural frame 204. In such an example, matrix material 210 can include a plurality of protrusions which extend vertically from a surface of curved structural frame to form intersecting lines 212.

According to various examples, matrix material 210 can be helpful to achieve a uniform thickness of adhesive 206 in cold-formed glass assembly 200. This is because matrix material 210 can contact each of curved structural frame 204 and curved glass substrate 202 as the two are pressed together. Matrix material 210 acts as a barrier and controls the distance between curved structural frame 204 and curved glass substrate 202. Therefore, adhesive 206 has a uniform amount of space, defined by matrix material 210, that it can fill. Moreover, the series of openings 214 bounded by lines 212 can help to prevent significant amounts of adhesive 206 from flowing away from cold-formed glass assembly 200. Moreover, according to various examples, matrix material 210 can serve as a reinforcement component in cold-formed glass assembly 200, which can help to strengthen the overall structure or help to minimize the propagation of a crack or other failure in adhesive 206.

According to various examples, including matrix material 210 can provide various benefits compared to corresponding cold-formed glass that is free of matrix material 210 but instead uses a one or more spacers or microspheres. This can be for example, because include independent elements such as spacers or microspheres do not provide the same continuous network as matrix material 210. Spacers or microspheres are not a continuous network because it can be difficult to ensure a homogeneous distribution of spacers of microspheres in adhesive 206, which can allow adhesive 206 to flow out of cold-formed glass assembly 200. Moreover, it can be difficult to ensure that that the spacers or microspheres have substantially the same height this can lead to adhesive 206 not having a substantially uniform thickness. As is understood, even slight deviations in the thickness of adhesive 206 can reduce the bond strength between adhesive 206 and either curved glass substrate 202, curved structural frame 204, or both can dramatically reduce the bond strength therebetween.

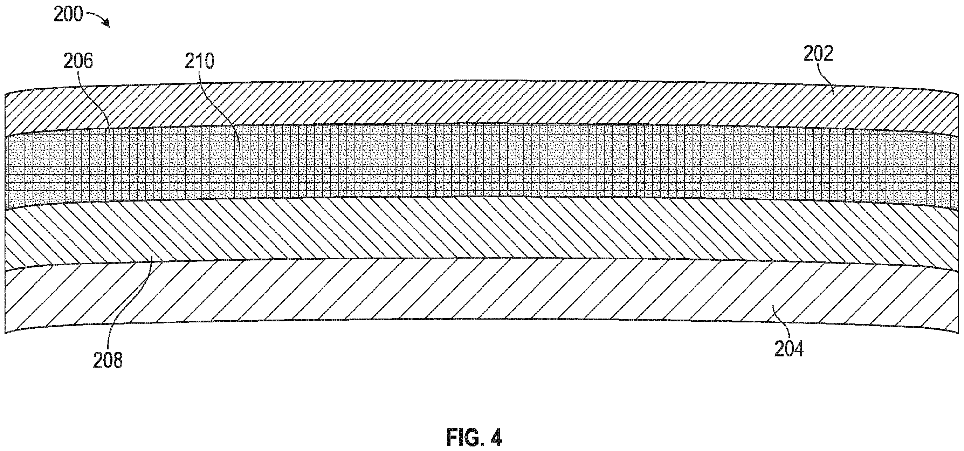

According to various further examples, cold-formed glass assembly 200 can further include an elastomeric layer. FIG. 4 is a sectional view showing cold-formed glass assembly 200 including elastomeric layer 208 disposed between curved structural frame 204 and adhesive 206. Elastomeric layer 208 can have a Young's Modulus in a range of from about 0.1 MPa to about 20 MPa, about 0.5 MPa to about 10 MPa, less than, equal to, or greater than about 0.1 MPa, 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, or about 20 MPa. Elastomeric layer 208 can include a polymer or combination of polymers. For example, elastomeric layer 108 can include a styrenic block copolymer, a thermoplastic polyolefin elastomer, a thermoplastic vulcanizate, a thermoplastic polyurethane, a thermoplastic copolyester, a thermoplastic polyamide, a silicone rubber, an ethylene propylene diene monomer rubber, copolymers thereof, or mixtures thereof. A thickness of elastomeric layer 208 can be in a range of from about 0.1 mm to about 5 mm, about 0.5 mm to about 2 mm, less than, equal to, or greater than about 0.1 mm, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, or about 5 mm.

Cold-formed glass assembly 200 can include a second adhesive that can be located between curved structural frame 204 and elastomeric layer 208. The second adhesive layer can include the same or different materials as adhesive 206. The second adhesive can also include a matrix material substantially the same or different materials as matrix material 210. In some examples, it may be possible for elastomeric layer 208 to include a matrix material that is substantially the same as matrix material 210. According to some examples, each of adhesive 206, the second adhesive, or elastomeric layer 208 can include individual matrix materials 210. Alternatively, matrix material 210 can pass through all or at least a portion of adhesive 206, the second adhesive, and elastomeric layer 208.

As mentioned herein, elastomeric layer 208 can be helpful in decreasing the degree of structural deformation such that it is less in cold-formed glass assembly 200 as compared to a degree of structural deformation in a corresponding cold-formed glass assembly that is free of the elastomeric layer. As an example, of the structural deformation that is reduced, the amount of the maximum structural adhesive shear stress in cold-formed glass assembly 200 can be substantially reduced. These stresses can be reduced in part by the ability of elastomeric layer 208 being able to absorb stresses caused by the non-uniform expansion or contraction of curved glass substrate 202 and curved structural frame 204, matrix material 210, or a combination thereof, to which elastomeric layer 208 is exposed during manufacturing and during normal use. Cold-formed glass assembly 200 can be formed according to any suitable method. As an example of a suitable method, cold-formed glass assembly 200 can be formed by applying adhesive 206 to a surface of curved glass substrate 202, curved structural frame 204, or both. Following application of adhesive 206 matrix material can be applied to adhesive 206. A glass substrate can then be brought into contact with curved glass substrate 202 and curved thereon through a cold-forming process. According to various examples, adhesive 206 can be over-injection molded or cast onto curved glass substrate 202, curved structural frame 204, matrix material 210, or a combination thereof. In examples, where matrix material 210 is integrally formed with curved structural frame 204, adhesive 206 can simply be applied over matrix material 210 to embed material 210 in adhesive 206. In examples that include the elastomeric material, the elastomeric material can be over-injection molded or casted to adhesive 206.

### Working Examples

Various examples of the present disclosure can be better understood by reference to the following Working Examples which are offered by way of illustration. The present disclosure is not limited to the Working Examples given herein.

### Working Example 1: Cold-formed glass assembly with elastomeric layer

To mitigate the impact of a coefficient of thermal expansion (CTE) mismatch, a thin (e.g., 0.5 mm - 1 mm thick) soft elastomeric polymer layer with Young's Modulus in a range of from 0.5 MPa to 10 MPa was adhered on top of a curved structural frame and a cover glass was cold-formed and curved onto the soft elastomeric polymer using a structural adhesive(s). The soft elastomeric polymer layer was overmolded directly onto the curved structural frame using conventional overmolding processes, such as over-injection molding. Overmolding is a process where a single part is created using two or more different materials in combination. It was found that with the addition of the soft elastomeric polymer layer, structural deformation in the overall cold-formed assembly and the maximum structural adhesive shear stresses was reduced under environmental temperature changes. This was demonstrated in a finite element analysis (FEA) model that included a cover glass, a structural adhesive layer and a structural frame with or without a soft elastomeric polymer layer adhered on top of the structural frame. The results are described in Table 1 and Table 2. The FEA model was created using a commercial FEA software (Abaqus 6.14, Dassault Systèmes Americas Corp., Waltham, MA). For demonstration and proof-of-concept purposes, a flat laminated structure was used in the FEA model.

**Table 1 Material properties used in the FEA model.**

| **Material Properties** | | | | |
|---|---|---|---|---|
| **Element** | **Material** | **Young's Modulus (MPa)** | **Poisson's Ratio** | **CTE (K⁻¹)** |
| Cover glass | Corning® Gorilla® Glass (Corning Incorporated, Corning, NY, USA) | 69,300 | 0.22 | 7.58 × 10⁻⁶ |
| Structural Frame 1 | Aluminum, Al | 70,000 | 0.33 | 2.31 × 10⁻⁵ |
| Structural Frame 2 | PC-ABS thermoplastic | 2,000 | 0.4 | 7.38 × 10^{- 5} |
| Structural adhesive | 3M™ Scotch-Weld™ Urethane Adhesive DP640 | 100 | 0.4 | 1.21 × 10^{- 4} |
| Soft elastomeric polymer | polydimethylsiloxane (PDMS) (Sylgard 184™ having a 10:1 mixing ratio, Dow Corning Corporation, Midland, MI) | 0.5 - 10 | 0.45 | 1.80 × 10⁻⁴ |

**Table 2 Simulation parameters used in the FEA model.**

| **Simulation Parameters** | |
|---|---|
| Cover glass dimension | 400 mm × 130 mm × 0.55 mm |
| Structural frame dimensions (PC-ABS and aluminum) | 400 mm × 130 mm × 3.15 mm |
| Structural adhesive thickness | 0.5 mm: with or without soft elastomeric polymer layer |
| | 1 mm: without soft elastomeric polymer layer |
| | 1.5 mm: without soft elastomeric polymer layer |
| Soft elastomeric polymer layer thickness | 0.5 mm 1 mm |
| Temperature change | 66°C to -40°C |
| Contact surface constrain | tie |
| Element | C3D8 solid element |

**Table 3 Simulated maximum structural adhesive shear stress in the laminated structure when temperature changed from 66°C to -40°C.**

| **Maximum structural adhesive shear stress (MPa) in PC-ABS laminated structure when temperature changed from 66°C to -40°C** | | | | | | | | | | |
|---|---|---|---|---|---|---|---|---|---|---|
| | | Soft elastomeric polymer modulus (MPa) | | | | | | Control (no soft elastomeric polymer layer) | | |
| | | 0.5 | 1 | 2 | 4 | 6 | 10 | 0.5 mm thick structural adhesive laver | 1.0 mm thick structural adhesive layer | 1.5 mm thick structural adhesive layer |
| Soft elastomeric polymer layer thickness (mm) | 0.5 | 2.882 | 2.997 | 3.274 | 3.687 | 4.003 | 4.491 | 9.18 | 6.81 | 5.658 |
| | 1 | 2.708 | 2.811 | 2.984 | 3.261 | 3.486 | 3.854 | | | |

| **Maximum structural adhesive shear stress (MPa) in aluminum laminated structure when temperature changed from 66°C to -40°C** | | | | | | | | | | |
|---|---|---|---|---|---|---|---|---|---|---|
| | | Soft elastomeric pol lymer modulus (MPa) | | | | | | Control (no soft elastomeric polymer layer) | | |
| | | 0.5 | 1 | 2 | 4 | 6 | 10 | 0.5 mm thick structural adhesive layer | 1.0 mm thick structural adhesive layer | 1.5 mm thick structural adhesive layer |
| Soft elastomeric polymer layer thickness (mm) | 0.5 | 2.641 | 2.703 | 2.805 | 2.968 | 3.102 | 3.322 | 5.987 | 4.622 | 4.044 |
| | 1 | 2.603 | 2.638 | 2.698 | 2.801 | 2.889 | 3.046 | | | |

As shown in the FEA model simulation results in Table 3, the simulated maximum structural adhesive shear stresses in both the PC-ABS (structural frame 2) and the aluminum (structural frame 1) laminated structures were significantly reduced with the addition of a thin (e.g., 0.5 mm or 1 mm) soft elastomeric polymer layer when temperature changed from 66 °C to - 40 °C. The soft elastomeric polymer modulus ranged from 0.5 MPa to 10 MPa.

As shown, the simulated maximum structural adhesive shear stresses in both the PC-ABS and the aluminum laminated structures with 1 mm (1.5 mm) thick structural adhesive layer and without any soft elastomeric polymer layer were reduced from 6.81 MPa (5.658 MPa) and 4.622 MPa (4.044 MPa) to 3.274 MPa (2.984 MPa) and 2.805 MPa (2.698 MPa), respectively, when a 0.5 mm thick (1 mm thick) and 2 MPa modulus soft elastomeric polymer layer was added to the laminated structure. Simulated structural deformation in the laminated structure was also reduced with the addition of a thin (0.5 mm or 1 mm) soft elastomeric polymer layer when temperature changed from 66°C to - 40°C, as shown in Table 4, for soft elastomeric polymer modulus that ranged from 0.5 MPa to 10 MPa. For example, the simulated end deflections in both the PC-ABS and the aluminum laminated structures with 1 mm (1.5 mm) thick structural adhesive layer and without any soft elastomeric polymer layer were reduced from 31.53 mm (31.53 mm) and 5 mm (5 mm) to 29.62 mm (24.61 mm) and 2.86 mm (2.22 mm), respectively, when a 0.5 mm thick (1 mm thick) and 2 MPa modulus soft elastomeric polymer layer was added to the laminated structure.

**Table 4 Simulated structural deformation in the laminated structure when temperature changed from 66°C to -40°C.**

| **Structural deformation in PC-ABS laminated structure when temperature changed from 66°C to -40°C** | | | | | | | | | | | | |
|---|---|---|---|---|---|---|---|---|---|---|---|---|
| | | | Soft elastomeric polymer modulus (MPa) | | | | | | Control (no softelastomeric polymer layer) | | | |
| | | | 0.5 | 1 | 2 | 4 | 6 | 10 | | 0.5 mm thick structural adhesive layer | 1.0 mm thick structural adhesive layer | 1.5 mm thick structural adhesive laver |
| Soft elastomeric polymer layer thickness (mm) | 0.5 | Overall curvature (mm) | 920 | 760 | 690 | 680 | 675 | 670 | Overall curvature (mm) | 650 | 650 | 650 |
| | | End deflection (mm) | 22.00 | 26.79 | 29.62 | 30.08 | 30.31 | 30.55 | End deflection (mm) | 31.53 | 31.53 | 31.53 |
| | 1 | Overall curvature (mm) | 1,050 | 900 | 825 | 765 | 750 | 725 | | | | |
| | | End deflection (mm) | 19.22 | 22.50 | 24.61 | 26.61 | 27.16 | 28.13 | | | | |

| **Structural deformation in aluminum laminated structure when temperature changed from 66°C to -40°C** | | | | | | | | | | | | |
|---|---|---|---|---|---|---|---|---|---|---|---|---|
| | | | Soft elastomeric pol ymer modulus (MPa) | | | | | | Control (no softelastomeric polymer layer) | | | |
| | | | 0.5 | 1 | 2 | 4 | 6 | 10 | | 0.5 mm thick structural adhesive layer | 1.0 mm thick structural adhesive layer | 1.5 mm thick structural adhesive layer |
| Soft elastomeric polymer layer thickness (mm) | 0.5 | Overall curvature (mm) | 16,000 | 10,000 | 7,000 | 5,500 | 5,000 | 4,500 | Overall curvature (mm) | 4,000 | 4,000 | 4,000 |
| | | End deflection (mm) | 1.25 | 2.00 | 2.86 | 3.64 | 4.00 | 4.45 | End deflection (mm) | 5.00 | 5.00 | 5.00 |
| | 1 | Overall curvature (mm) | 24,000 | 14,250 | 9,000 | 6,500 | 5,750 | 5,000 | | | | |
| | | End deflection (mm) | 0.83 | 1.40 | 2.22 | 3.08 | 3.48 | 4.00 | | | | |

### Working Example 2: Cold-formed glass assembly with embedded matrix material

A 0.55 mm thick 440 mm × 150 mm Corning® Gorilla® Glass (Corning Incorporated, Corning, NY, USA) was cold-formed onto a 0.125" thick S-shaped aluminum (5052) structural frame using a vacuum bag cold forming process with 3M™ Scotch-Weld™ Epoxy Adhesive DP460 (3M Company, Maplewood, MN) as the structural adhesive, and without and with a 0.3 mm thick mesh (FibaTape® Standard Mesh Drywall Tape, Saint-Gobain Adfors, Peoria, AZ) In a comparative example, free of the mesh, the structural adhesive was applied directly onto the S-shaped structural frame using a metal putty knife with two 0.3 mm diameter stainless steel wires (0.012 gauge and 1/4 lb WT., Malin Co., Brookpark, OH) attached to the opposite edges of the metal putty knife in order to control the adhesive layer thickness during the adhesive application. In the case of the working examples using the mesh, the mesh was first self-adhered onto the S-shaped structural frame before applying the structural adhesive into the mesh using a plastic putty knife. In this case, because of the presence of the mesh, the structural adhesive could be easily applied and confined by the mesh onto the surface and edges of the S-shaped structural frame. In both cases, after the vacuum bag cold forming process, the structural adhesive was cured at 66 °C for 3 hours before removing the cold-formed S-shaped assembly from the vacuum bag.

After removing the cold-formed S-shaped assembly from the vacuum bag, it was observed that an excess amount of structural adhesive was squeezed out from the edges of the S-shaped structural frame during the vacuum bag cold forming process in the case of without the mesh while only a small amount of structural adhesive got squeezed out of the edges of the S-shaped structural frame in the case of with the mesh. This was because there was no adhesive layer thickness control in the case of without the mesh during the vacuum cold forming process while in the examples that included the mesh, the mesh helped maintain the desired adhesive layer thickness during the vacuum cold forming process.

Next, in order to validate and demonstrate the advantages of integrating a mesh into the structural adhesive during the cold forming process, the two cold-formed S-shaped assemblies (without and with the mesh) were inspected for cover glass distortion in the flat display area under a checker box pattern setup. The checker box pattern setup projected a perfect checker box pattern onto the cover glass surface of the cold-formed S-shaped assembly. If there was no distortion on the cover glass surface, a perfect checker box pattern was noted. Conversely, any cover glass distortion would be reflected in the projected checker box pattern. As can be seen in the projected checker box patterns, there was significant cover glass (checker box pattern) distortion in the flat display area of the cold-formed S-shaped assembly that did not have a mesh while only moderate cover glass (checker box pattern) distortion was observed in the flat display area of the cold-formed S-shaped assembly that had the mesh. This simple checker box pattern inspection method confirmed the advantages of integrating a mesh into the structural adhesive in reducing the cover glass distortion in the cold-formed S-shaped assembly.

Flat cover glass laminated assemblies without and with a mesh were tested under the headform impact test (HIT) to demonstrate the advantages of integrating a mesh into the structural adhesive as a reinforcer. HIT is well-adopted in the automotive industry to satisfy the regulatory requirements for the instrument panels and center consoles inside the automobile interiors. The HIT setup included a HIT sample mounting assembly, a 165.1 mm diameter aluminum impact head that weighted 6.8 kg with a maximum impact velocity of 6.69 m/s and a calculated maximum impact energy of 152 J. In these HITs, the HIT sample mounting assembly included a flat 3.17 mm thick 194 mm × 108 mm aluminum plate and four 4.82 mm thick stainless steel C-shaped brackets. A 0.7 mm thick 150 mm × 90 mm non-ion exchanged cover glass was laminated onto the flat aluminum plate of the HIT sample mounting assembly using MasterBond® EP21TDCHT-LO toughened two component epoxy (Master Bond Inc., Hackensack, NJ, USA) as the structural adhesive without and with a mesh. The structural adhesive of each cover glass laminated assembly was cured at 66 °C for 3 hours before the HIT. As a proof-of concept demonstration, three different polyester meshes with various openings and wire diameters were used in the cover glass laminated assemblies: (1) white UV-resistant vinyl-coated polyester mesh with 1.58 mm opening and 0.40 mm wire diameter (McMaster-Carr Part No.: 87655K11, Elmhurst, IL, USA), (2) white moisture-resistant polyester mesh with 1.32 mm opening and 0.39 mm wire diameter (McMaster-Carr Part No.: 9218T62), and (3) white moisture-resistant polyester mesh with 0.50 mm opening and 0.22 mm wire diameter (McMaster-Carr Part No.: 9218T68). Each individual HIT sample mounting assembly with the laminated cover glass was then mounted onto the HIT setup for performing the HIT. After each HIT, the laminated cover glass was thoroughly inspected for any breakages.

From the HIT results, in the case of without the mesh, the laminated cover glass was broken into many pieces with glass fragments that came off from the aluminum plate during the head impact. In the cases of with the mesh, two tiny glass cracks near the corners of the laminated cover glass were observed in the case of with the white UV-resistant vinyl-coated polyester mesh with 1.58 mm opening and 0.40 mm wire diameter (McMaster-Carr Part No.: 87655K11) while relatively larger glass breakages in the laminated cover glass were observed in the case of with the white moisture-resistant polyester mesh with 0.5 mm opening and 0.22 mm wire diameter (McMaster-Carr Part No.: 9218T68). Conversely, in the case of with the white moisture-resistant polyester mesh with 1.32 mm opening and 0.39 mm wire diameter (McMaster-Carr Part No.: 9218T62), no glass breakage or cracks were observed. Several more HITs were performed on the cover glass laminated assemblies without and with the meshes used above. Similar results were obtained demonstrating the advantages of integrating a mesh into the structural adhesive.

The terms and expressions that have been employed are used as terms of description and not of limitation, and there is no intention in the use of such terms and expressions of excluding any equivalents of the features shown and described or portions thereof, but it is recognized that various modifications are possible within the scope of the examples of the present disclosure. Thus, it should be understood that although the present disclosure has been specifically disclosed by specific examples and optional features, modification and variation of the concepts herein disclosed may be resorted to by those of ordinary skill in the art, and that such modifications and variations are considered to be within the scope of examples of the present disclosure.

### Additional Examples.

The following exemplary examples are provided, the numbering of which is not to be construed as designating levels of importance:
Example 1 provides a cold-formed glass assembly comprising:
   a curved glass substrate;
   a curved structural frame, wherein a coefficient of thermal expansion between the curved glass substrate and the curved structural frame are different;
   an adhesive disposed between the curved glass substrate and the curved structural frame; and
   an elastomeric layer in contact with the adhesive and disposed between the curved glass substrate and the curved structural frame.
Example 2 provides the cold-formed glass assembly of Example 1, wherein the curved glass substrate comprises soda lime silicate glass, alkali aluminosilicate glass, alkali containing borosilicate glass, alkali aluminophosphosilicate glass, alkali aluminoborosilicate glass, or a mixture thereof.
Example 3 provides the cold-formed glass assembly of Example 2, wherein the soda lime silicate glass is substantially free of iron, iron oxide, or mixtures thereof.
Example 4 provides the cold-formed glass assembly of any one of Examples 1-3, wherein a thickness of the curved glass substrate is in a range of from about 0.3 mm to about 5 mm. Example 5 provides the cold-formed glass assembly of any one of Examples 1-4, wherein a thickness of the curved glass substrate is in a range of from about 0.5 mm to about 3 mm. Example 6 provides the cold-formed glass assembly of any one of Examples 1-5, wherein the curved structural frame comprises a metal, a ceramic, a plastic, a fiber glass, a carbon fiber or a mixture thereof.
Example 7 provides the cold-formed glass assembly of Example 6, wherein the metal comprises aluminum, steel, titanium, magnesium, alloys thereof, or mixtures thereof.
Example 8 provides the cold-formed glass assembly of any one of Examples 6 or 7, wherein the ceramic comprises alumina, silica, ceria, a silicon nitride, a glass, an alumina-phosphorous pentoxide, an alumina-boria-silica, a zirconia, a zirconia-alumina, a zirconia-silica, an aluminum oxide, a heat-treated aluminum oxide, a sintered aluminum oxide, a silicon carbide material, titanium diboride, boron carbide, tungsten carbide, titanium carbide, diamond, cubic boron nitride, garnet, fused alumina-zirconia, cerium oxide, zirconium oxide, titanium oxide, or a mixture thereof.
Example 9 provides the cold-formed glass assembly of any one of Examples 6-8, wherein the plastic comprises a polyolefin, a polycarbonate, a polyurethane, a polyester, a polystyrene, a polyketone, copolymers thereof, glass filled equivalents thereof, or mixtures thereof.
Example 10 provides the cold-formed glass assembly of Example 9, wherein the polyolefin comprises a polypropylene, a polyethylene, copolymers thereof, or mixtures thereof.
Example 11 provides the cold-formed glass assembly of any one of clams 1-10, wherein the curved structural frame comprises an opening bounded by the curved structural frame.
Example 12 provides the cold-formed glass assembly of Example 11, wherein the curved glass substrate substantially covers the opening.
Example 13 provides the cold-formed glass assembly of any one of Examples 1-12, wherein the elastomeric layer comprises a polymer.
Example 14 provides the cold-formed glass assembly of Example 13, wherein the polymer comprises a styrenic block copolymer, a thermoplastic polyolefin elastomer, a thermoplastic vulcanizate, a thermoplastic polyurethane, a thermoplastic copolyester, a thermoplastic polyamide, a silicone rubber, an ethylene propylene diene monomer rubber, copolymers thereof, or mixtures thereof.
Example 15 provides the cold-formed glass assembly of any one of Examples 1-14, wherein a Young's Modulus of the elastomeric layer is in a range of from about 0.1 MPa to about 20 MPa. Example 16 provides the cold-formed glass assembly of any one of Examples 1-15, wherein a Young's Modulus of the elastomeric layer is in a range of from about 0.5 MPa to about 10 MPa. Example 17 provides the cold-formed glass assembly of any one of Examples 1-16, wherein a thickness of the elastomeric layer is in a range of from about 0.1 mm to about 5 mm.
Example 18 provides the cold-formed glass assembly of any one of Examples 1-17, wherein a thickness of the elastomeric layer is in a range of from about 0.5 mm to about 2 mm.
Example 19 provides the cold-formed glass assembly of any one of Examples 1-18, wherein a thickness of the adhesive is in a range of from about 0.1 mm to about 5 mm.
Example 20 provides the cold-formed glass assembly of any one of Examples 1-19, wherein a thickness of the adhesive is in a range of from about 0.5 mm to about 2 mm.
Example 21 provides the cold-formed glass assembly of any one of Examples 1-20, wherein the adhesive comprises an acrylic adhesive, an epoxy adhesive, a urethane adhesive, a polyurethane adhesive, or a mixture thereof.
Example 22 provides the cold-formed glass assembly of any one of Examples 1-21, wherein the coefficient of thermal expansion of the curved glass substrate is less than the coefficient of thermal expansion of the curved structural frame.
Example 23 provides the cold-formed glass assembly of any one of Examples 1-22, wherein the curved glass substrate is a laminate comprising:
   a first glass layer comprising a first major surface and a second major surface opposing the first major surface;
   a second glass layer comprising a third major surface and a fourth major surface opposing the third major surface; and
   an interlayer disposed between the first glass layer and the second glass layer and adjacent the second major surface and the third major surface.
Example 24 provides the cold-formed glass assembly of Example 23, wherein the interlayer comprises polyvinyl butyral, acoustic polyvinyl butyral, an ionomer, ethylene-vinyl acetate, a thermoplastic polyurethane, a polyester, polyethylene terephthalate, or a mixture thereof. Example 25 provides the cold-formed glass assembly of any one of Examples 1-24, wherein a degree of structural deformation in the cold-formed glass assembly is less than a degree of structural deformation in a corresponding cold-formed glass assembly that is free of the elastomeric layer.
Example 26 provides the cold-formed glass assembly of any one of Examples 1-25, wherein at least one of the curved glass substrate, the adhesive, the elastomeric layer, and the curved structural frame are substantially transparent.
Example 27 provides a method of making the cold-formed glass assembly of any one of Examples 1-26, the method comprising:
   applying the adhesive to a surface of the elastomeric layer; and
   applying the elastomeric layer to the curved structural frame;
   applying the curved glass substrate to the adhesive.
Example 28 provides the method of Example 27, wherein the curved glass substrate is curved upon contact with the adhesive.
Example 29 provides the method of any one of Examples 27 or 28, wherein the curved glass substrate is cold-formed onto the adhesive.
Example 30 provides the method of any one of Examples 27-29, wherein the elastomeric layer is over-injection molded or cast onto the curved glass substrate, the curved structural frame, the adhesive, or a combination thereof.
Example 31 provides the method of any one of Examples 27-30, wherein the adhesive is applied to multiple surfaces of the elastomeric layer.
Example 32 provides a cold-formed glass assembly comprising:
   a curved glass substrate;
   a curved structural frame;
   an adhesive disposed between the curved glass substrate and the curved structural frame; and
   a matrix material at least partially disposed in the adhesive and comprising a gridded network comprising a series of intersecting lines of the matrix material.
Example 33 provides the cold-formed glass assembly of Example 32, wherein the curved glass substrate comprises soda lime silicate glass, alkali aluminosilicate glass, alkali containing borosilicate glass, alkali aluminophosphosilicate glass, alkali aluminoborosilicate glass, or a mixture thereof.
Example 34 provides the cold-formed glass assembly of Example 33, wherein the soda lime silicate glass is substantially free of iron, iron oxide, or mixtures thereof.
Example 35 provides the cold-formed glass assembly of any one of Examples 32-34, wherein a thickness of the curved glass substrate is in a range of from about 0.3 mm to about 5 mm.
Example 36 provides the cold-formed glass assembly of any one of Examples 32-35, wherein a thickness of the curved glass substrate is in a range of from about 0.5 mm to about 3 mm.
Example 37 provides the cold-formed glass assembly of any one of Examples 32-36, wherein the curved structural frame comprises a metal, a ceramic, a plastic, a fiber glass, a carbon fiber or a mixture thereof.
Example 38 provides the cold-formed glass assembly of Example 37, wherein the metal comprises aluminum, steel, titanium, magnesium, alloys thereof, or mixtures thereof.
Example 39 provides the cold-formed glass assembly of any one of Examples 37 or 38, wherein the ceramic comprises alumina, silica, ceria, a silicon nitride, a glass, an alumina-phosphorous pentoxide, an alumina-boria-silica, a zirconia, a zirconia-alumina, a zirconia-silica, an aluminum oxide, a heat-treated aluminum oxide, a sintered aluminum oxide, a silicon carbide material, titanium diboride, boron carbide, tungsten carbide, titanium carbide, diamond, cubic boron nitride, garnet, fused alumina-zirconia, cerium oxide, zirconium oxide, titanium oxide, or a mixture thereof.
Example 40 provides the cold-formed glass assembly of any one of Examples 37-39, wherein the plastic comprises a polyolefin, a polycarbonate, a polyurethane, a polyester, a polystyrene, a polyketone, copolymers thereof, glass filled equivalents thereof, or mixtures thereof.
Example 41 provides the cold-formed glass assembly of Example 40, wherein the polyolefin comprises a polypropylene, a polyethylene, copolymers thereof, or mixtures thereof.
Example 42 provides the cold-formed glass assembly of any one of clams 32-41, wherein the curved structural frame comprises at least an opening bounded by the curved structural frame. Example 43 provides the cold-formed glass assembly of Example 42, wherein the curved glass substrate substantially covers the opening.
Example 44 provides the cold-formed glass assembly of any one of Examples 32-43, wherein the curved glass substrate is a laminate comprising:
   a first glass layer comprising a first major surface and a second major surface opposing the first major surface;
   a second glass layer comprising a third major surface and a fourth major surface opposing the third major surface; and
   an interlayer disposed between the first glass layer and the second glass layer and adjacent the second major surface and the third major surface.
Example 45 provides the cold-formed glass assembly of Example 44, wherein the interlayer comprises polyvinyl butyral, acoustic polyvinyl butyral, an ionomer, ethylene-vinyl acetate, a thermoplastic polyurethane, a polyester, polyethylene terephthalate, or a mixture thereof. Example 46 provides the cold-formed glass assembly of any one of Examples 32-45, wherein a thickness of the adhesive is in a range of from about 0.1 mm to about 5 mm.
Example 47 provides the cold-formed glass assembly of any one of Examples 32-46, wherein a thickness of the adhesive is in a range of from about 0.5 mm to about 2 mm.
Example 48 provides the cold-formed glass assembly of any one of Examples 32-47, wherein the adhesive comprises an acrylic adhesive, an epoxy adhesive, a urethane adhesive, a polyurethane adhesive, or a mixture thereof.
Example 49 provides the cold-formed glass assembly of any one of Examples 32-48, wherein the matrix material comprises a metal, a ceramic, a plastic, a fiber glass, a carbon fiber, or a mixture thereof.
Example 50 provides the cold-formed glass assembly of Example 49, wherein the metal comprises aluminum, steel, titanium, magnesium, alloys thereof, or mixtures thereof.
Example 51 provides the cold-formed glass assembly of any one of Examples 49 or 50, wherein the ceramic comprises alumina, silica, ceria, a silicon nitride, a glass, an alumina-phosphorous pentoxide, an alumina-boria-silica, a zirconia, a zirconia-alumina, a zirconia-silica, an aluminum oxide, a heat-treated aluminum oxide, a sintered aluminum oxide, a silicon carbide material, titanium diboride, boron carbide, tungsten carbide, titanium carbide, diamond, cubic boron nitride, garnet, fused alumina-zirconia, cerium oxide, zirconium oxide, titanium oxide, or a mixture thereof.
Example 52 provides the cold-formed glass assembly of any one of Examples 49-51, wherein the plastic comprises a polyolefin, a polycarbonate, a polyurethane, a polyester, a polystyrene, a polyketone, copolymers thereof, glass filled equivalents thereof, or mixtures thereof.
Example 53 provides the cold-formed glass assembly of Example 52, wherein the polyolefin comprises a polypropylene, a polyethylene, copolymers thereof, or mixtures thereof.
Example 54 provides the cold-formed glass assembly of any one of Examples 32-53, wherein a height of the gridded network is substantially the same as a thickness of the adhesive.
Example 55 provides the cold-formed glass assembly of any one of Examples 32-54, wherein the gridded network comprises a mesh layer fully embedded in the adhesive.
Example 56 provides the cold-formed glass assembly of any one of Examples 32-55, wherein the gridded network comprises a plurality of protrusions integrally formed and extending from the curved structural frame.
Example 57 provides the cold-formed glass assembly of any one of Examples 32-56, wherein the series of intersecting lines form a plurality of openings in the gridded network.
Example 58 provides the cold-formed glass assembly of Example 57, wherein the plurality of openings independently have a substantially circular shape or a polygonal shape.
Example 59 provides the cold-formed glass assembly of Example 58, wherein the polygonal shape is chosen from a triangular shape, a quadrilateral shape, a pentagonal shape, or a hexagonal shape.
Example 60 provides the cold-formed glass assembly of any one of Examples 57-59, wherein a size of each of the plurality of openings are substantially the same.
Example 61 provides the cold-formed glass assembly of any one of Examples 57-60, wherein a shape of each of the plurality of openings are substantially the same.
Example 62 provides the cold-formed glass assembly of any one of Examples 57-61, wherein the openings independently have a major dimension in a range of from about 0.1 mm to about 5 mm. Example 63 provides the cold-formed glass assembly of any one of Examples 57-62, wherein the openings independently have a major dimension in a range of from about 0.5 mm to about 3 mm. Example 64 provides a method of forming the cold-formed glass assembly of any one of
Examples 32-63, the method comprising:
   at least partially embedding the matrix material in the adhesive; and
   contacting at least one of the curved glass substrate and the curved structural frame with the adhesive.
Example 65 provides the method of Example 64, wherein the curved glass substrate is curved upon contact with the adhesive.
Example 66 provides the method of any one of Examples 64-65, wherein the curved glass substrate is cold-formed onto the adhesive.
Example 67 provides the method of any one of Examples 64-66, wherein the matrix material is formed on the curved structural frame by additive manufacturing, over-injection molding or casting.
Example 68 provides the method of any one of Examples 64-67, wherein the matrix material is formed within the curved glass substrate.
Example 69 provides a cold-formed glass assembly comprising:
   a curved glass substrate;
   a curved structural frame, wherein a coefficient of thermal expansion between the curved glass substrate and the curved structural frame are different;
   an adhesive disposed between the curved glass substrate and the curved structural frame;
   an elastomeric layer in contact with the adhesive and disposed between the curved glass substrate and the curved structural frame; and
   a matrix material at least partially disposed in the adhesive, the elastomeric layer, or both and comprising a gridded network comprising a series of intersecting lines of the matrix material.
Example 70 provides the cold-formed glass assembly of Example 69, wherein the curved glass substrate comprises soda lime silicate glass, alkali aluminosilicate glass, alkali containing borosilicate glass, alkali aluminophosphosilicate glass, alkali aluminoborosilicate glass, or a mixture thereof.
Example 71 provides the cold-formed glass assembly of Example 70, wherein the soda lime silicate glass is substantially free of iron, iron oxide, or mixtures thereof.
Example 72 provides the cold-formed glass assembly of any one of Examples 69-71, wherein a thickness of the curved glass substrate is in a range of from about 0.3 mm to about 5 mm. Example 73 provides the cold-formed glass assembly of any one of Examples 69-72, wherein a thickness of the curved glass substrate is in a range of from about 0.5 mm to about 3 mm. Example 74 provides the cold-formed glass assembly of any one of Examples 69-73, wherein the curved structural frame comprises a metal, a ceramic, a plastic, a fiber glass, a carbon fiber, or a mixture thereof.
Example 75 provides the cold-formed glass assembly of Example 74, wherein the metal comprises aluminum, steel, titanium, magnesium, alloys thereof, or mixtures thereof.
Example 76 provides the cold-formed glass assembly of any one of Examples 74 or 75, wherein the ceramic comprises alumina, silica, ceria, a silicon nitride, a glass, an alumina-phosphorous pentoxide, an alumina-boria-silica, a zirconia, a zirconia-alumina, a zirconia-silica, an aluminum oxide, a heat-treated aluminum oxide, a sintered aluminum oxide, a silicon carbide material, titanium diboride, boron carbide, tungsten carbide, titanium carbide, diamond, cubic boron nitride, garnet, fused alumina-zirconia, cerium oxide, zirconium oxide, titanium oxide, or a mixture thereof.
Example 77 provides the cold-formed glass assembly of any one of Examples 74-76, wherein the plastic comprises a polyolefin, a polycarbonate, a polyurethane, a polyester, a polystyrene, a polyketone, copolymers thereof, glass filled equivalents thereof, or mixtures thereof.
Example 78 provides the cold-formed glass assembly of Example 77, wherein the polyolefin comprises a polypropylene, a polyethylene, copolymers thereof, or mixtures thereof.
Example 79 provides the cold-formed glass assembly of any one of Examples 69-78, wherein the curved structural frame comprises at least an opening bounded by the curved structural frame.
Example 80 provides the cold-formed glass assembly of Example 79, wherein the curved glass substrate substantially covers the opening.
Example 81 provides the cold-formed glass assembly of any one of Examples 69-80, wherein the elastomeric layer comprises a polymer.
Example 82 provides the cold-formed glass assembly of Example 81, wherein the polymer comprises a styrenic block copolymer, a thermoplastic polyolefin elastomer, a thermoplastic vulcanizate, a thermoplastic polyurethane, a thermoplastic copolyester, a thermoplastic polyamide, a silicone rubber, an ethylene propylene diene monomer rubber, copolymers thereof, or mixtures thereof.
Example 83 provides the cold-formed glass assembly of any one of Examples 69-82, wherein a Young's Modulus of the elastomeric layer is in a range of from about 0.1 MPa to about 20 MPa.
Example 84 provides the cold-formed glass assembly of any one of Examples 69-83, wherein a Young's Modulus of the elastomeric layer is in a range of from about 0.5 MPa to about 10 MPa.
Example 85 provides the cold-formed glass assembly of any one of Examples 69-84, wherein a thickness of the elastomeric layer is in a range of from about 0.1 mm to about 5 mm.
Example 86 provides the cold-formed glass assembly of any one of Examples 69-85, wherein a thickness of the elastomeric layer is in a range of from about 0.5 mm to about 2 mm.
Example 87 provides the cold-formed glass assembly of any one of Examples 69-86, wherein a thickness of the adhesive is in a range of from about 0.1 mm to about 5 mm.
Example 88 provides the cold-formed glass assembly of any one of Examples 69-87, wherein a thickness of the adhesive is in a range of from about 0.5 mm to about 2 mm.
Example 89 provides the cold-formed glass assembly of any one of Examples 69-88, wherein the adhesive comprises an acrylic adhesive, an epoxy adhesive, a urethane adhesive, a polyurethane adhesive, or a mixture thereof.
Example 90 provides the cold-formed glass assembly of any one of Examples 69-89, wherein the coefficient of thermal expansion of the curved glass substrate is less than the coefficient of thermal expansion of the curved structural frame.
Example 91 provides the cold-formed glass assembly of any one of Examples 69-90, wherein the curved glass substrate is a laminate comprising:
   a first glass layer comprising a first major surface and a second major surface opposing the first major surface;
   a second glass layer comprising a third major surface and a fourth major surface opposing the third major surface; and
   an interlayer disposed between the first glass layer and the second glass layer and adjacent the second major surface and the third major surface.
Example 92 provides the cold-formed glass assembly of Example 91, wherein the interlayer comprises polyvinyl butyral, acoustic polyvinyl butyral, an ionomer, ethylene-vinyl acetate, a thermoplastic polyurethane, a polyester, polyethylene terephthalate, or a mixture thereof.
Example 93 provides the cold-formed glass assembly of any one of Examples 69-92, wherein a degree of structural deformation in the cold-formed glass assembly is less than a degree of structural deformation in a corresponding cold-formed glass assembly that is free of the elastomeric layer.
Example 94 provides the cold-formed glass assembly of any one of Examples 69-93, wherein at least one of the curved glass substrate, the adhesive, the elastomeric layer, the gridded network, and the curved structural frame are substantially transparent.
Example 95 provides the cold-formed glass assembly of any one of Examples 69-94, wherein the matrix material comprises a metal, a ceramic, a plastic, a fiber glass, a carbon fiber, or a mixture thereof.
Example 96 provides the cold-formed glass assembly of Example 95, wherein the metal comprises aluminum, steel, titanium, magnesium, alloys thereof, or mixtures thereof.
Example 97 provides the cold-formed glass assembly of any one of Examples 95 or 96, wherein the ceramic comprises alumina, silica, ceria, a silicon nitride, a glass, an alumina-phosphorous pentoxide, an alumina-boria-silica, a zirconia, a zirconia-alumina, a zirconia-silica, an aluminum oxide, a heat-treated aluminum oxide, a sintered aluminum oxide, a silicon carbide material, titanium diboride, boron carbide, tungsten carbide, titanium carbide, diamond, cubic boron nitride, garnet, fused alumina-zirconia, cerium oxide, zirconium oxide, titanium oxide, or a mixture thereof.
Example 98 provides the cold-formed glass assembly of any one of Examples 95-97, wherein the plastic comprises a polyolefin, a polycarbonate, a polyurethane, a polyester, a polystyrene, a polyketone, copolymers thereof, glass filled equivalents thereof, or mixtures thereof.
Example 99 provides the cold-formed glass assembly of Example 98, wherein the polyolefin comprises a polypropylene, a polyethylene, copolymers thereof, or mixtures thereof.
Example 100 provides the cold-formed glass assembly of any one of Examples 69-99, wherein a height of the gridded network is substantially the same as a thickness of the adhesive.
Example 101 provides the cold-formed glass assembly of any one of Examples 69-100, wherein the gridded network comprises a mesh layer fully embedded in the adhesive.
Example 102 provides the cold-formed glass assembly of any one of Examples 69-101, wherein the gridded network comprises a plurality of protrusions integrally formed and extending from the curved structural frame.
Example 103 provides the cold-formed glass assembly of any one of Examples 69-102, wherein the series of intersecting lines form a plurality of openings in the gridded network.
Example 104 provides the cold-formed glass assembly of Example 103, wherein the plurality of openings independently have a substantially circular shape or a polygonal shape.
Example 105 provides the cold-formed glass assembly of Example 104, wherein the polygonal shape is chosen from a triangular shape, a quadrilateral shape, a pentagonal shape, or a hexagonal shape.
Example 106 provides the cold-formed glass assembly of any one of Examples 103-105, wherein a size of each of the plurality of openings are substantially the same.
Example 107 provides the cold-formed glass assembly of any one of Examples 104-106, wherein a shape of each of the plurality of openings are substantially the same.
Example 108 provides the cold-formed glass assembly of any one of Examples 104-107, wherein the openings independently have a major dimension in a range of from about 0.1 mm to about 5 mm.
Example 109 provides the cold-formed glass assembly of any one of Examples 104-108, wherein the openings independently have a major dimension in a range of from about 0.5 mm to about 3 mm.
Example 110 provides a method of forming the cold-formed glass assembly of any one of Examples 69-109, the method comprising:
   applying the adhesive to a surface of the elastomeric layer;
   applying the elastomeric layer to the curved structural frame;
   at least partially embedding the matrix material in the adhesive, the elastomeric layer or both; and
   contacting at least one of the curved glass substrate and the curved structural frame with the adhesive.
Example 111 provides the method of Example 110, wherein the curved glass substrate is curved upon contact with the adhesive.
Example 112 provides the method of any one of Examples 110 or 111, wherein the curved glass substrate is cold-formed onto the adhesive.
Example 113 provides the method of any one of Examples 110-112, wherein the matrix material is formed on the curved structural frame, the curved glass substrate, or both by additive manufacturing, over-injection molding or casting.
Example 114 provides the method of any one of Examples 110-113, wherein the adhesive is applied to multiple surfaces of the elastomeric layer.
Example 115 provides a vehicle comprising the cold-formed glass assembly of any one of Examples 1-114.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in any order without departing from the principles of the disclosure, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%.

## Claims

1. A cold-formed glass assembly comprising:
a curved glass substrate;
a curved structural frame, wherein a coefficient of thermal expansion between the curved glass substrate and the curved structural frame are different;
an adhesive disposed between the curved glass substrate and the curved structural frame; and
one of an elastomeric layer in contact with the adhesive and disposed between the curved glass substrate and the curved structural frame, and a matrix material at least partially disposed in the adhesive and comprising a gridded network comprising a series of intersecting lines of the matrix material.

2. The cold-formed glass assembly of claim 1, wherein the assembly comprise the elastomeric layer and the matrix material.

3. The cold-formed glass assembly of claim 1 or claim 2, wherein the curved glass substrate comprises soda lime silicate glass, alkali aluminosilicate glass, alkali containing borosilicate glass, alkali aluminophosphosilicate glass, alkali aluminoborosilicate glass, or a mixture thereof.

4. The cold-formed glass assembly of any one of the preceding claims, wherein the curved structural frame comprises a metal, a ceramic, a plastic, a fiber glass, a carbon fiber or a mixture thereof.

5. The cold-formed glass assembly of any one of the preceding claims, wherein the elastomeric layer comprises a polymer.

6. The cold-formed glass assembly of claim 5, wherein the polymer comprises a styrenic block copolymer, a thermoplastic polyolefin elastomer, a thermoplastic vulcanizate, a thermoplastic polyurethane, a thermoplastic copolyester, a thermoplastic polyamide, a silicone rubber, an ethylene propylene diene monomer rubber, copolymers thereof, or mixtures thereof.

7. The cold-formed glass assembly of any one of the preceding, wherein a Young's Modulus of the elastomeric layer is in a range of from about 0.1 MPa to about 20 MPa.

8. The cold-formed glass assembly of any one of the preceding claims, wherein a Young's Modulus of the elastomeric layer is in a range of from about 0.5 MPa to about 10 MPa.

9. The cold-formed glass assembly of any one of the preceding claims, wherein the matrix material comprises a metal, a ceramic, a plastic, a fiber glass, a carbon fiber, or a mixture thereof.

10. The cold-formed glass assembly of any one of the preceding claims, wherein a height of the gridded network is substantially the same as a thickness of the adhesive.

11. The cold-formed glass assembly of any one of the preceding claims , wherein the gridded network comprises a mesh layer fully embedded in the adhesive.

12. The cold-formed glass assembly of any one of the preceding claims , wherein the gridded network comprises a plurality of protrusions integrally formed and extending from the curved structural frame.

13. The cold-formed glass assembly of any one of the preceding claims, wherein the series of intersecting lines form a plurality of openings in the gridded network.

14. A method of making the cold-formed glass assembly comprising:
applying the elastomeric layer to a curved structural frame;
applying the adhesive to a surface of the elastomeric layer;
applying a curved glass substrate to the adhesive.

15. The method of claim 14, further comprising:
at least partially embedding a matrix material in the adhesive; and
contacting at least one of the curved glass substrate and the curved structural frame with the adhesive.
